# EUROPEAN PATENT SPECIFICATION

(11) **EP 3 279 700 B1**
(45) Date of publication and mention of the grant of the patent: **06.01.2021**
(21) Application number: 17169119.9
(22) Date of filing: 02.05.2017
(51) Int. Cl.: G01V 5/00

(54) **SECURITY INSPECTION CENTRALIZED MANAGEMENT SYSTEM**
ZENTRALISIERTES SICHERHEITSINSPEKTIONVERWALTUNGSSYSTEM
SYSTÈME DE GESTION CENTRALISÉE D'INSPECTION DE SÉCURITÉ

(30) Priority: 04.08.2016 CN 201610633586
(43) Date of publication of application: 07.02.2018
(73) Proprietor: Nuctech Company Limited, TongFang Building, Shuangqinglu, Haidian District Beijing 100084 (CN)
(72) Inventor: LIU, Xudong, Beijing, 100084 (CN); LI, Youmin, Beijing, 100084 (CN); ZHANG, Yunlong, Beijing, 100084 (CN); WANG, Tao, Beijing, 100084 (CN)
(74) Representative: Cabinet Beau de Loménie

(56) References cited:
- CN-U- 204 695 380
- CN-U- 205 405 809
- US-A1- 2013 069 773

## Description

### TECHNICAL FIELD

The present invention generally relates to a security inspection system, and more particularly, to a security inspection management system.

### BACKGROUND

With the rapid development of the transportation industry such as the subway and the civil aviation, urgent needs for large capacity, high security, low cost and new functions of various data including security are continuously increasing. At present, various security information used for the transportation operation such as the subway is separated, unassociated and scattered with each other, and thus query work of a staff responsible for central control is cumbersome, complex and inefficient, which results in that analysis, judgement and processing for events is hysteretic, information island phenomenon is serious, different types of system data are difficult to be integrated, and comprehensive and accurate process information cannot be provided for processing security emergencies, and thereby the security inspection integrated management system used for the subway and the like has serious defects. Therefore, it is necessary to establish a convenient, rigorous and highly sensitive information management system, so as to greatly improve the overall security assurance ability, while being helpful for managerial staffs at all levels to perform daily management, analysis and work arrangement.

At present, in the transportation operation such as the subway, staffs responsible for the security inspection system are prone to fatigue due to prolonged work at a security inspection workstation, resulting in reduced work ability, low work efficiency, increased error rate, and hysteretic analysis, judgement and processing for accidents, that is, the staffs responsible for the security inspection are easy to make a wrong judgement and perform an incorrect operation while working, thus resulting in accidents. In general, fatigue is hard to be directly observed and is also difficult to be quantitatively described, but can be inferred only by relying on some information, that is, the fatigue needs to be inferred by combining a series of symptoms. Therefore, it is needed to add a set of convenient, rigorous and highly sensitive staff fatigue detection system into the security inspection management system of the subway, so as to greatly improve work efficiency of the staffs responsible for the security inspection of the subway, reduce accidents caused by the fatigue of the staffs, and improve the overall security assurance ability of the subway.

Document CN204695380U e.g. discloses a subway safety inspection integrated management system, comprising a central control system connected to a safety inspection system in a network and including one or more cameras for human safety inspection, explosive or liquid detection equipment, and intelligent analysis of the information thereof and real-time uploading of image information ans well as warning and status information. The document also discloses passenger monitoring via face recognition imaging. Document US2013/0069773 discloses an intelligent traffic safety system, including a fatigue detection system based on facial recognition, head movement, yawning, eye opening and closing and giving off an alarm. And document CN205405809U discloses a driver fatigue detection alarm system with a smart wrist-watch, including monitoring of the rhythm of the heart set up therein.

The above-mentioned information disclosed in the background portion is only used to reinforce understanding of the background of the present invention. Therefore, the above information may include information that does not constitute prior art known by those skilled in the art.

### SUMMARY

The present invention provides a security inspection centralized management system, according to claim 1, which can realize networking and integration of the security inspection, fatigue detection of security inspectors and multi-level interaction.

In addition, the present invention does not have any interference on the existing security inspection process, thus ensuring that the use of the present invention does not have any effect on the passing rate of the security inspection. Meanwhile, the use of the present invention also improves comprehensive management level and work efficiency of the staffs responsible for the security inspection and tries to reach zero learning and training costs, and realizes information management of security inspection work.

Other characteristics and advantages of the present invention become obvious over the following description in detail, or are partially derived from practice of the present invention.

According to the present invention, there is provided a security inspection centralized management system, according to claim 1.

In an exemplary embodiment of the present invention, the management server performs an intelligent interpretation on an image obtained from the inspection device and transmits data to the image interpretation workstation.

Further details and embodiments are disclosed in the dependent claims.

As an example, not forming part of the claimed invention, the fatigue detection system performs fatigue analysis on the staff by monitoring the change of a head and a facial organ state of the staff in a video.

In an example, the facial organ is an eye.

As an example, the fatigue detection system performs analysis and judgement by monitoring a fatigue state of the staff in the video and using an image processing method, wherein the fatigue state includes yawning, long-time eyes closed, or increased eyes blinking frequency.

In the security inspection centralized management system of the present invention, through networking and integration of the security inspection, real-time monitoring and statistical analysis of the passenger and the baggage can be realized, and centralized real-time monitoring of scanned images, liquid detection data, explosive detection data and live videos at the security checkpoint in the network can be realized, so as to facilitate a managerial staff to systematically perform statistics and query; and the occurrence of security inspection accidents of the subway can be reduced by performing fatigue detection on the staff and issuing a fatigue reminder to the staff. In addition, the central control system can communicate with the accident scene and the police station in time and handle the accident in time according to the security inspection result and the monitoring result, thus realizing multi-level interaction.

It should be appreciated that the above general description and the detailed description hereinafter are only illustrative but not for limiting the present invention.

### BRIEF DESCRIPTION OF THE DRAWINGS

The above and other objects, features and advantages of the present disclosure will become more apparent by describing in detail the exemplary embodiments thereof with reference to the accompanying drawings.
Fig. 1 is a simplified schematic diagram illustrating a framework of a security inspection centralized management system according to an exemplary embodiment of the present disclosure.
Fig. 2 is a schematic diagram illustrating a security inspection centralized management system according to an exemplary embodiment of the present disclosure.
Fig. 3 is a schematic diagram illustrating a security inspection centralized management system according to an exemplary embodiment of the present disclosure.
Fig. 4 is a schematic diagram illustrating a face recognition fatigue detection system according to an example not forming part of the claimed invention.
Fig. 5 is a schematic diagram illustrating a fatigue detection system based on human body physiological signals according to an exemplary embodiment of the present disclosure.

### DETAILED DESCRIPTION

Exemplary embodiments will now be described more fully with reference to the accompanying drawings. However, the exemplary embodiments can be implemented in a plurality of manners, and should not be understood as limited to the embodiments set forth herein. Instead, these embodiments are provided to make the present disclosure more thoroughly and completely, and to fully convey the concept of the exemplary embodiments to those skilled in the art. The accompanying drawings are merely schematic diagrams of the present disclosure, and are not necessarily drawn in proportion. In the accompanying drawings, the same reference numerals denote the same or similar parts, and thereby, repeated description thereof will be omitted.

In addition, the features, structures, or characteristics described may be combined in one or more embodiments in any suitable manner. In the following description, numerous specific details are provided to give a full understanding of the embodiments of the present disclosure. However, those skilled in the art will appreciate that the technical solutions of the present disclosure may be practiced without one or more of the specific details; or other methods, components, steps, and the like may be employed. In other instances, well-known structures, methods, implementations, or operations are not shown or described in detail to avoid obscuring aspects of the present disclosure.

Some block diagrams illustrated in the drawings are merely functional entities, but are not necessarily correspond to physically or logically independent entities. That is, these functional entities can be implemented by means of software, or these functional entities or a portion of these functional entities can be implemented in one or a plurality of hardware modules or integrated circuits, or these functional entities can be implemented in different networks and/or processors apparatuses and/or microcontroller apparatuses.

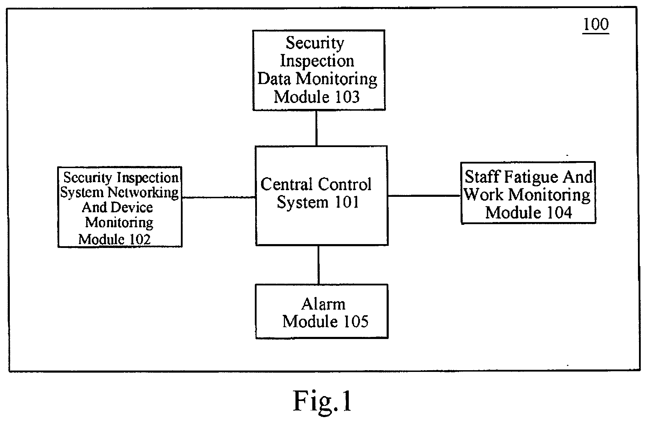

First of all, a framework of a security inspection centralized management system will be briefly explained by combining with Fig. 1.

Fig. 1 is a simplified schematic diagram illustrating a framework of a security inspection centralized management system according to an exemplary embodiment of the present disclosure.

As shown in Fig. 1, a framework of a security inspection centralized management system 100 is mainly composed of function modules, such as a central control system 101, a security inspection system networking and device monitoring module 102 configured to perform a network connection between security inspection systems and devices in a network and monitor states, a security inspection data monitoring module 103 configured to intensively monitor scanned images, explosive detection data, liquid detection data and live videos at the security checkpoint in the network in real time, a staff fatigue and work monitoring module 104 configured to perform fatigue detection and work state monitoring of staffs in the network, and an alarm module 105 configured to issue an alarm and perform one key multi-level interaction. In this way, networking and integration of the security inspection centralized management system can be realized, fast and efficient services can be provided to passengers, and comprehensive management level and work efficiency of the staffs working at the subway station can be improved, meanwhile, and zero learning and training costs can be achieved as far as possible, and information management of security inspection work can be realized.

The security inspection centralized management system will be explained in detail by combining with the accompanying drawings.

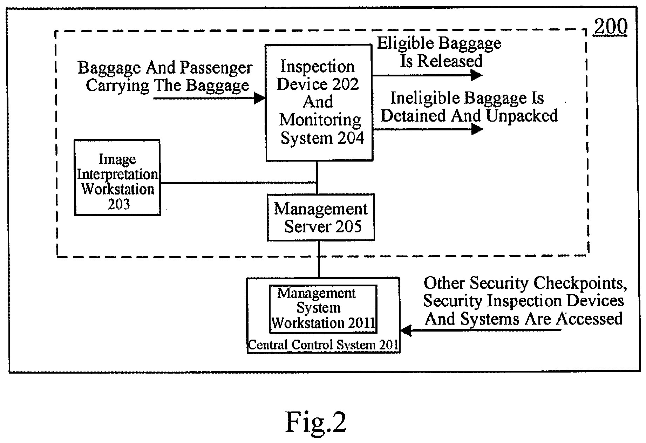

Fig. 2 is a schematic diagram illustrating a security inspection centralized management system according to an exemplary embodiment of the present disclosure.

As shown in Fig. 2, a security inspection centralized management system 200 includes: a central control system 201 connected to a security inspection system and a device at each security checkpoint in a network via the network, so as to realize a network connection between the security inspection system and the device in the network and state monitoring; a management system workstation 2011 arranged in the central control system and configured to display security inspection information at each security checkpoint in real time, so as to realize real-time monitoring, search and management of the security inspection information; an inspection device 202, which is usually an X-ray inspection system and is configured to scan items in a baggage to obtain an image; an image interpretation workstation 203 configured to interpret by a staff the image obtained from the inspection device to determine whether the baggage is safe or suspected; a monitoring system 204 including a surveillance camera and disposed at the inspection device, the monitoring system 204 is configured to monitor a situation of the baggage and a passenger carrying the baggage when passing through the X-ray inspection system in real time; a management server 205 located at a node between the security checkpoint and the central control system connected via the network, that is, take the management server as a center, the management server is connected to each security inspection system and each device at the security checkpoint via the network and is accessed to the central control system, and the management server is configured to summarize and process data at the security checkpoint and upload the processed data to the central control system.

According to an exemplary embodiment, the baggage passing through the inspection device is inspected, and the image obtained by scanning the items in the baggage is centrally uploaded to the management server. A cloud cluster server performs intelligent image interpretation on an X-ray image, performs monitoring, summarization, integration and identification on important data of the suspected baggage having a high matching degree with dangerous baggage database and then transmits data information to the image interpretation workstation.

According to an exemplary embodiment, eligible baggage passes through the inspection device securely after being interpreted.

According to an exemplary embodiment, the security inspection centralized management system further includes an alarm system, the suspected baggage may trigger an alarm, and then may be detained and unpacked. After unpacking inspection, for a severe violation, the alarm system may interact with an alarm system of a police station to trigger the alarm; and alarm information can be transmitted to the cloud cluster server for statistical analysis.

According to an exemplary embodiment, the central control system displays a real-time running state of the inspection device at each security checkpoint, when the inspection device at a certain security checkpoint fails, an alarm will be issued in time, then relevant staffs are dispatched to perform fault processing on the inspection device at the security checkpoint, and the management system workstation performs statistics on the fault processing or maintenance situation.

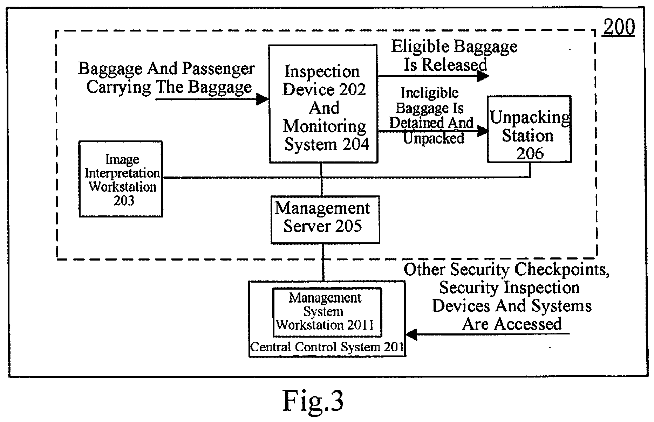

According to an exemplary embodiment, as shown in Fig. 3, the security inspection centralized management system 200 further includes an unpacking station 206, provided with a liquid detector and/or an explosive detector and configured to detect suspected liquid and/or suspected explosives contained in the baggage, so as to further detect and determine the suspected baggage.

According to an exemplary embodiment, the management server processes abnormal liquid detection data and/or the explosive detection data and uploads the processed data to the central control system for data backup.

According to an exemplary embodiment, the monitoring system 204 monitors the inspection scene in real time includes: monitoring a state of a passenger carrying a baggage before the baggage passes through the inspection device, during the baggage passes through the inspection device or after the baggage passes through the inspection device, since a large flow of passengers at the subway station, the airport and the railway station, for the case that the suspected baggage cannot be accurate to an individual, the scope of suspects can be narrowed by means of a segment video search or a fuzzy correspondence when it is found that the baggage is suspected by monitoring the state of the passenger carrying the baggage before the baggage passes through the inspection device, during the baggage passes through the inspection device or after the baggage passes through the inspection device, so as to improve search efficiency.

According to an exemplary embodiment, the security inspection centralized management system further includes: a fatigue detection system configured to automatically detect an off-the-job state and/or a fatigue degree of a staff in real time. When the staff appears a fatigue state, fatigue data will be sent to the central control system for statistical analysis, so as to guide work arrangement, and meanwhile, an automatic alarm reminder will be issued at the scene at which the staff works.

The fatigue detection system is a face recognition fatigue detection system or a fatigue detection system based on human body physiological signals. The detection device (i.e., a detection camera used for the face recognition fatigue detection system, or a smart bracelet used for the fatigue detection system based on human body physiological signals) of the fatigue detection system can be disposed at all systems and devices or all staffs at various security checkpoints, thus, although the fatigue detection system is not embodied in Fig. 2 or Fig. 3, those skilled in the art will readily understand based on the above description.

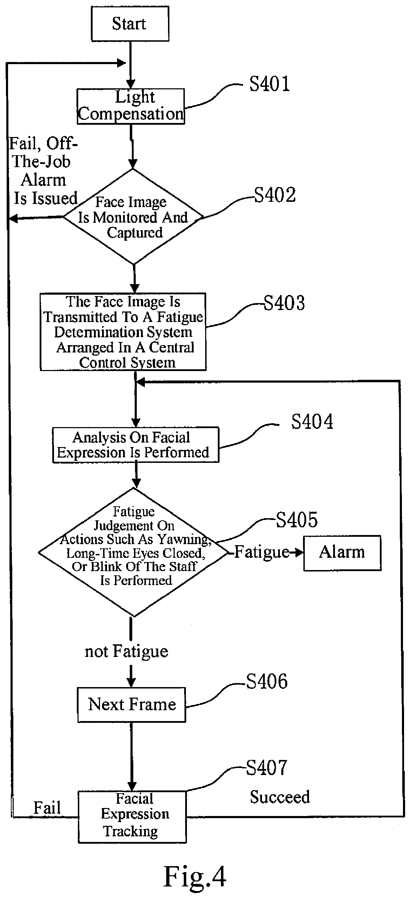

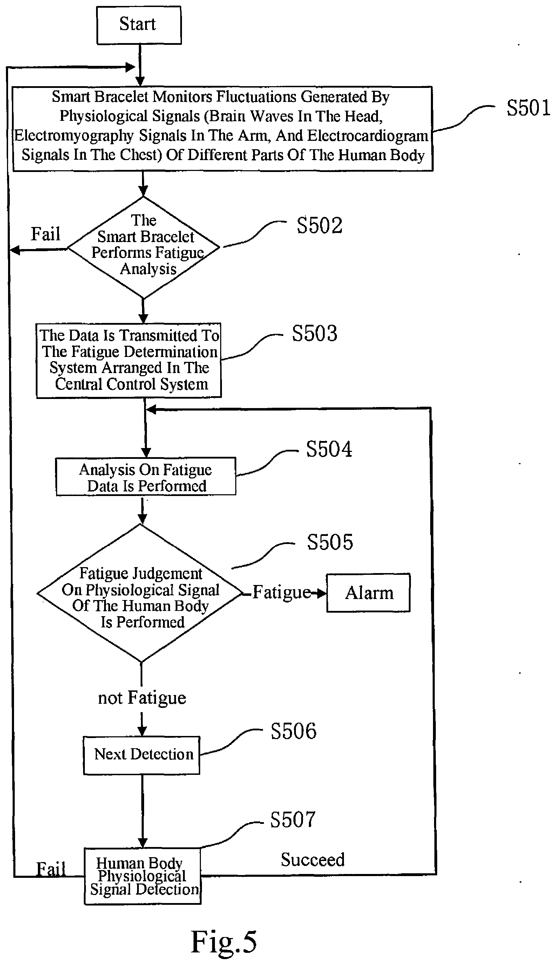

Hereinafter, the face recognition fatigue detection system and the fatigue detection system based on the human body physiological signals will be described in detail by combining with Figs. 4 and 5, respectively.

Fig. 4 is a schematic diagram illustrating a face recognition fatigue detection system according to an example, not forming part of the present invention.

The face recognition fatigue detection system includes: a face expression detection system disposed at the security checkpoint, and a fatigue determination system arranged in the central control system.

The face expression detection system includes: a detection camera disposed at each system and each device at each security checkpoint and configured to capture and monitor facial expression of a staff working at a subway station in real time; and a fatigue alarm system configured to issue an alarm reminder when it is determined that the staff is fatigued.

The central control system is provided with a set of fatigue determination system and is configured to manage fatigue analysis, judgement and alarm of the staff responsible for security inspection.

The fatigue analysis on the staff is performed by detecting the change of a head and a facial organ (mainly an eye detection) state of the staff in a video taken by the camera. The fatigue detection system performs real-time video analysis and fatigue state judgement by monitoring characteristics such as yawning, long-time eyes closed, or increased eyes blinking frequency of the stuff in the video, and using an image processing method.

When the above-mentioned fatigue state of the staff is detected, fatigue data will be transmitted to the central control system arranged in the security inspection centralized management system via the network, the fatigue determination system performs analysis and judgement on the fatigue data, and when it is determined that the staff is fatigued, the alarm reminder will automatically appear in a scene at which the staff works.

As shown in Fig. 4, the specific detection process of the face recognition fatigue detection system is as follows.

In S401, light compensation is performed.

In S402, a face image of a staff is monitored and captured through a detection camera, and if it fails, an off-the-job alarm is issued and S401 is repeated to restart.

In S403, the face image is transmitted to a fatigue determination system arranged in a central control system.

In S404, analysis on facial expression is performed.

In S405, fatigue analysis and judgement on characteristics such as yawning, long-time eyes closed, or increased eyes blinking frequency of the staff is performed, and if it is determined that the staff is fatigued, the alarm reminder will automatically appear in a scene at which the staff works.

In S406, if it is determined that the staff is not fatigued, a next frame face image is read.

In S407, facial expression tracking on a new read face image is performed, if it succeeds, S404 is repeated; and if it fails, S401 is repeated to restart.

Fig. 5 is a schematic diagram illustrating a fatigue detection system based on human body physiological signals according to an exemplary embodiment of the present disclosure.

The application of the fatigue detection system based on the human body physiological signals is as follows.

A human body physiological information identification smart bracelet worn by a staff at each security checkpoint in a network is configured to detect physiological signals of the staff generated due to fatigue. And, a monitoring system and a fatigue alarm system are arranged to monitor the staff in real time and issue an alarm reminder when it is determined that the staff is fatigued.

A set of human body physiological signal fatigue determination system arranged in the central control system is configured to manage fatigue analysis, judgement and alarm of the staff responsible for security inspection.

The smart bracelet is mainly used to collect physiological signals of different parts of the human body (such as brain waves in the head, electromyography EMG signals in the arm, and electrocardiogram ECG signals in the chest), and the fatigue degree of the staff responsible for the security inspection is determined according to the change of the signals. When the brain waves in the head, electromyography EMG signals in the arm, or electrocardiogram ECG signals in the chest generate fatigue signals, the smart bracelet will make analysis and judgement and transmit the result to the human body physiological signal fatigue determination system arranged in the central control system via the network. The human body physiological signal fatigue determination system performs analysis and judgement on fatigue data, and when it is determined that the staff is fatigued, the alarm reminder will automatically appear in a scene at which the staff works.

As shown in Fig. 5, a specific detection process of the fatigue detection system based on the human body physiological signals is as follows.

In S501, a smart bracelet monitors fluctuations generated by physiological signals (such as brain waves in the head, electromyography EMG signals in the arm, and electrocardiogram ECG signals in the chest) of different parts of the human body.

In S502, the smart bracelet performs fatigue analysis using fluctuation signal data, and if it fails, S501 is repeated to start again.

In S503, the data is transmitted to the fatigue determination system arranged in the central control system.

In S504, analysis on fatigue data is performed.

In S505, fatigue judgement on physiological signal data of the human body is performed, and if it is determined that the staff is fatigued, the alarm reminder will automatically appear in a scene at which the staff works.

In S506, if it is determined that the staff is not fatigued, next human body physiological signal detection is performed.

In S507, if new human body physiological signal detection succeeds, S504 is repeated; and if the new human body physiological signal detection fails, S501 is repeated to start again.

According to an exemplary embodiment, the security inspection centralized management system further includes: an information network broadcasting and receiving module configured to realize remote management, remote monitoring and remote command of a managerial staff.

According to an exemplary embodiment, the security inspection centralized management system further includes: a multimedia information database configured to store at least one of a text, an image, a graphic, and voice information thereof; and a multimedia information query and search module.

Based on the multimedia information database, the security inspection centralized management system can realize query and search functions of multimedia information at each security checkpoint.

The security inspection centralized management system stores dynamic video images of the passenger and the baggage when passing through the scene of the inspection device such as a X-ray inspection device, an X-ray perspective image of the baggage of the passenger, liquid detection data, explosive detection data, fatigue detection and work state monitoring of the staff in the network, and the real-time operating state of the security inspection device at each security checkpoint in the network in related database in a central control system (if the amount of data of a part of videos and audios is too large, these data can be stored in a management server without being uploaded to the central control system). The multimedia information query and search module is based on multimedia information (for example, text, image, graphic, and voice information thereof) database, can provide a numerical information function, and can also provide a comprehensive search function for each security checkpoint (that is, information search can be achieved by a user through a few simple and intuitive interfaces), and thus, a new, complete and efficient work platform can be provided for security operation of a traffic system such as the subway and the quantification of each post during security inspection.

## Claims

1. A security inspection centralized management system, comprising:
a central control system (101, 201) connected to a security inspection system (102) and an inspection device (202) at each of a plurality of security checkpoints in a network via the network, so as to realize a network connection between the security inspection systems and the devices at the checkpoints n the network and wherein the management system is configured for fatigue detection and work state monitoring of staff; and wherein the central control system (101,201) comprises:
a management system workstation (2011) configured to display, monitor and manage security inspection information in real time; the management system further comprising the security inspection system (102) which comprises:
an inspection device (202);
an image interpretation workstation (203);
a monitoring system (204) disposed at the inspection device (202) and configured to monitor an inspection scene in real time;
a management server (205) located at a node between the security checkpoint and the central control system (101, 201) via the network and configured to summarize, process and upload data of the security checkpoint;
the management system further comprising:
a fatigue detection system disposed at the security checkpoints and configured to automatically detect an off-the-job state and/or a fatigue degree of a staff in real time,
wherein the fatigue detection system is a system based on human body physiological signals and comprises:
a smart bracelet worn by the staff and configured to detect and collect physiological signals of different parts of the human body, and make an analysis and a judgement based thereon and transmit the result thereof to a human body physiological signal fatigue determination system, and,
a monitoring alarm system configured to monitor the staff in real time and issue an alarm when it is determined, by the fatigue determination system, that the staff is fatigued; and
wherein the central control system (101,102) further comprises:
the human body physiological signal fatigue determination system which is used for fatigue analysis, judgment and alarm of the staff, and to determine a degree of fatigue of the staff based on a change of the physiological signals, and wherein
the physiological signals comprise brain waves in the head, and/or electromyography EMG signals in the arm.

2. The security inspection centralized management system of claim 1, wherein the management server (205) performs an interpretation on an image obtained from the inspection device (202) and transmits data to the image interpretation workstation (203).

3. The security inspection centralized management system of claim 2, further comprising: an alarm system configured to trigger an alarm or interact with an alarm system of a police station to trigger the alarm in a predetermined condition and transmit alarm information to the management server (205) to perform statistical analysis.

4. The security inspection centralized management system of claim 1, wherein the central control system (101, 201) is further configured to display a real-time operating state of each inspection device (202) and issue an alarm when the inspection device (202) fails, so that the management system workstation (2011) can perform statistical analysis on fault processing.

5. The security inspection centralized management system of claim 1, further comprising: an unpacking station (206) provided with a liquid detector and/or an explosive detector and configured to further detect a suspected baggage.

6. The security inspection centralized management system of claim 5, wherein the management server (205) processes abnormal liquid detection data and/or explosive detection data, and uploads the processed result to the central control system (101, 201).

7. The security inspection centralized management system of claim 1, wherein the monitoring system (204) monitors the inspection scene in real time comprises: monitoring a state of a passenger carrying a baggage before the baggage passes through the inspection device (202), during the baggage passes through the inspection device (202) or after the baggage passes through the inspection device (202), so as to narrow the scope of suspects by means of a segment video search or a fuzzy correspondence when it is found that the baggage is suspected.

8. The security inspection centralized management system of claim 1, wherein fatigue data is transmitted to the central control system (101, 201) via the network when the fatigue state of the staff is detected, the fatigue determination system performs analysis and judgement on the fatigue data, and when it is determined that the staff is fatigued, the alarm reminder will automatically appear in a scene at which the staff works.

9. The security inspection centralized management system of claim 1, wherein when a fatigue signal is generated, the smart bracelet makes analysis and judgement and transmits the result to a human body physiological signal fatigue detection system via the network, wherein the human body physiological signal fatigue detection system performs analysis and judgement on fatigue data, and when it is determined that the staff is fatigued, the alarm will automatically appear in a scene at which the staff works.

10. The security inspection centralized management system of claim 1, further comprising: an information network broadcasting and receiving module configured to realize remote management, remote monitoring and remote command of a managerial staff.

11. The security inspection centralized management system of claim 1, further comprising: a multimedia information database configured to store at least one of a text, an image, a graphic, and voice information.

12. The security inspection centralized management system of claim 11, wherein the multimedia information comprises: at least one of dynamic video images of a passenger and a baggage when passing through the scene of the inspection device (202), an inspection image of the baggage, liquid detection data, explosive detection data, fatigue detection and work state monitoring of the staff, and a real-time operating state of a security inspection device (202) at the security checkpoint in the network.

13. The security inspection centralized management system of claim 1, further comprising: a multimedia information query and search module configured to provide a numerical information function and a search function.

## Patentansprüche

1. Zentralisiertes Managementsystem zur Sicherheitsinspektion, umfassend:
ein zentrales Steuersystem (101, 201), das mit einem Sicherheitsinspektionssystem (102) und einer Inspektionsvorrichtung (202) an jedem von einer Vielzahl von Sicherheitskontrollpunkten in einem Netz über das Netz verbunden ist, um so eine Netzverbindung zwischen den Sicherheitsinspektionssystemen und den Vorrichtungen an den Kontrollpunkten in dem Netz zu realisieren, und wobei das Managementsystem zur Ermüdungserkennung und Arbeitszustandsüberwachung des Personals konfiguriert ist, und wobei das zentrale Steuersystem (101, 201) umfasst:
eine Managementsystem-Workstation (2011), die dazu konfiguriert ist, Informationen zu Sicherheitsinspektionen in Echtzeit anzuzeigen, zu überwachen und zu verwalten,
wobei das Managementsystem ferner das Sicherheitsinspektionssystem (102) umfasst, das umfasst:
eine Inspektionsvorrichtung (202),
eine Bildinterpretations-Workstation (203),
ein Überwachungssystem (204), das an der Inspektionsvorrichtung (202) angeordnet und dazu konfiguriert ist, einen Inspektionsort in Echtzeit zu überwachen,
einen Managementserver (205), der sich an einem Knotenpunkt zwischen dem Sicherheitskontrollpunkt und dem zentralen Steuersystem (101, 201) über das Netz befindet und dazu konfiguriert ist, Daten des Sicherheitskontrollpunktes zusammenzufassen, zu verarbeiten und hochzuladen,
wobei das Managementsystem ferner umfasst:
ein Ermüdungserkennungssystem, das an den Sicherheitskontrollpunkten angeordnet und dazu konfiguriert ist, automatisch einen arbeitsfreien Zustand und/oder einen Ermüdungsgrad des Personals in Echtzeit zu erkennen,
wobei das Ermüdungserkennungssystem ein System ist, das auf physiologischen Signalen des menschlichen Körpers basiert und umfasst:
ein intelligentes Armband, das vom Personal getragen wird und dazu konfiguriert ist, physiologische Signale von verschiedenen Teilen des menschlichen Körpers zu erkennen und zu sammeln und darauf basierend eine Analyse und eine Beurteilung vorzunehmen und das Ergebnis an ein System zur Bestimmung der Ermüdung mittels physiologischer Signalen des menschlichen Körpers zu übermitteln, und
ein Überwachungsalarmsystem, das dazu konfiguriert ist, das Personal in Echtzeit zu überwachen und einen Alarm auszugeben, wenn durch das Ermüdungserkennungssystem festgestellt wird, dass das Personal ermüdet ist, und
wobei das zentrale Steuersystem (101, 102) ferner umfasst:
das System zur Bestimmung Ermüdung mittels physiologischer Signalen des menschlichen Körpers, das zur Ermüdungsanalyse, Beurteilung und Alarmierung des Personals und zur Bestimmung eines Ermüdungsgrades des Personals auf der Grundlage einer Änderung der physiologischen Signale verwendet wird, und wobei
die physiologischen Signale aus Gehirnwellen im Kopf und/oder Elektromyographie-EMG-Signalen im Arm bestehen.

2. Zentralisiertes Managementsystem zur Sicherheitsinspektion nach Anspruch 1,
wobei der Managementserver (205) eine Interpretation eines von der Inspektionsvorrichtung (202) erhaltenen Bildes durchführt und Daten an die Bildinterpretations-Workstation (203) überträgt.

3. Zentralisiertes Managementsystem zur Sicherheitsinspektion nach Anspruch 2, ferner umfassend:
ein Alarmsystem, das dazu konfiguriert ist, einen Alarm auszulösen oder mit einem Alarmsystem einer Polizeistation zu interagieren, um den Alarm in einem vorbestimmten Zustand auszulösen und Alarminformationen an den Managementserver (205) zu übertragen, um eine statistische Analyse durchzuführen.

4. Zentralisiertes Managementsystem zur Sicherheitsinspektion nach Anspruch 1, wobei das zentrale Steuersystem (101, 201) ferner dazu konfiguriert ist, einen Echtzeit-Betriebszustand jeder Inspektionsvorrichtung (202) anzuzeigen und einen Alarm auszugeben, wenn die Inspektionsvorrichtung (202) ausfällt, so dass die Managementsystem-Workstation (2011) eine statistische Analyse der Fehlerverarbeitung durchführen kann.

5. Zentralisiertes Managementsystem zur Sicherheitsinspektion nach Anspruch 1, ferner umfassend:
eine Auspackstation (206), die mit einem Flüssigkeitsdetektor und/oder einem Sprengstoffdetektor ausgestattet und dazu konfiguriert ist, ein verdächtiges Gepäckstück weiter zu untersuchen.

6. Zentralisiertes Managementsystem zur Sicherheitsinspektion nach Anspruch 5, wobei der Managementserver (205) Daten zur Erkennung abnormaler Flüssigkeiten und/oder Sprengstoffe verarbeitet und das Verarbeitungsergebnis in das zentrale Steuersystem (101, 201) hochlädt.

7. Zentralisiertes Managementsystem zur Sicherheitsinspektion nach Anspruch 1, wobei das Überwachungssystem (204) den Inspektionsort in Echtzeit überwacht, umfassend: Überwachen eines Zustands eines Passagiers, der ein Gepäck trägt, bevor das Gepäck die Inspektionsvorrichtung (202) durchläuft, während das Gepäck die Inspektionsvorrichtung (202) durchläuft oder nachdem das Gepäck die Inspektionsvorrichtung (202) durchlaufen hat, um den Umfang der Verdächtigen durch eine Segmentvideosuche oder eine unscharfe Entsprechung einzugrenzen, wenn festgestellt wird, dass das Gepäck verdächtig ist.

8. Zentralisiertes Managementsystem zur Sicherheitsinspektion nach Anspruch 1, wobei Ermüdungsdaten über das Netz an das zentrale Steuersystem (101, 201) übertragen werden, wenn der Ermüdungszustand des Personals erkannt wird, wobei das Ermüdungserkennungssystem eine Analyse und Beurteilung der Ermüdungsdaten durchführt, und wenn festgestellt wird, dass das Personal ermüdet ist, die Alarmerinnerung automatisch an einem Ort erscheint, an dem das Personal arbeitet.

9. Zentralisiertes Managementsystem zur Sicherheitsinspektion nach Anspruch 1, wobei das intelligente Armband bei der Erzeugung eines Ermüdungssignals eine Analyse und Beurteilung vornimmt und das Ergebnis über das Netz an ein System zur Erkennung der Ermüdung durch ein physiologisches Signal des menschlichen Körpers übermittelt, wobei das System zur Erkennung der Ermüdung durch ein physiologisches Signal des menschlichen Körpers eine Analyse und Beurteilung der Ermüdungsdaten vornimmt, und wenn festgestellt wird, dass das Personal ermüdet ist, der Alarm automatisch an einem Ort erscheint, an dem das Personal arbeitet.

10. Zentralisiertes Managementsystem zur Sicherheitsinspektion nach Anspruch 1, ferner umfassend: ein Informationsnetzsende- und -empfangsmodul, das dazu konfiguriert ist, leitendem Personal die Fernverwaltung, Fernüberwachung und Fernkontrolle zu ermöglichen.

11. Zentralisiertes Managementsystem zur Sicherheitsinspektion nach Anspruch 1, ferner umfassend: eine Multimedia-Informationsdatenbank, die dazu konfiguriert ist, mindestens eines von einem Text, einem Bild, einer Grafik und Sprachinformationen zu speichern.

12. Zentralisiertes Managementsystem zur Sicherheitsinspektion nach Anspruch 11, wobei die Multimedia-Informationen umfassen: mindestens eines von dynamischen Videobildern eines Passagiers und eines Gepäcks beim Passieren des Ortes der Inspektionsvorrichtung (202), ein Inspektionsbild des Gepäcks, Daten zur Detektion von Flüssigkeiten, Daten zur Detektion von Sprengstoffen, Ermüdungsdetektion und Überwachung des Arbeitszustands des Personals, und einen Echtzeit-Betriebszustand einer Sicherheitsinspektionsvorrichtung (202) an dem Sicherheitskontrollpunkt im Netz.

13. Zentralisiertes Managementsystem zur Sicherheitsinspektion nach Anspruch 1, ferner umfassend: ein Multimedia-Informationsabfrage- und Suchmodul, das dazu konfiguriert ist, eine numerische Informationsfunktion und eine Suchfunktion bereitzustellen.

## Revendications

1. Système de gestion centralisée d'inspection de sécurité, comprenant :
un système de commande central (101, 201) connecté à un système d'inspection de sécurité (102) et à un dispositif d'inspection (202) à chacun d'une pluralité de points de contrôle de sécurité dans un réseau via le réseau, de façon à réaliser une connexion en réseau entre les systèmes d'inspection de sécurité et les dispositifs aux points de contrôle dans le réseau et dans lequel le système de gestion est configuré pour la détection de la fatigue et la surveillance de l'état de travail du personnel ; et dans lequel le système de commande central (101, 201) comprend :
un poste de travail de système de gestion (2011) configuré pour afficher, surveiller et gérer des informations d'inspection de sécurité en temps réel ;
le système de gestion comprenant en outre le système d'inspection de sécurité (102) qui comprend :
un dispositif d'inspection (202) ;
un poste de travail d'interprétation d'image (203) ;
un système de surveillance (204) disposé au niveau du dispositif d'inspection (202) et configuré pour surveiller une scène d'inspection en temps réel ;
un serveur de gestion (205) situé au niveau d'un nœud entre le point de contrôle de sécurité et le système de commande central (101, 201) via le réseau et configuré pour résumer, traiter et téléverser des données du point de contrôle de sécurité ;
le système de gestion comprenant en outre :
un système de détection de fatigue disposé aux points de contrôle de sécurité et configuré pour détecter automatiquement un état hors du travail et/ou un degré de fatigue d'un personnel en temps réel,
dans lequel le système de détection de fatigue est un système basé sur des signaux physiologiques du corps humain et comprend :
un bracelet intelligent porté par le personnel et configuré pour détecter et collecter des signaux physiologiques de différentes parties du corps humain, et effectuer une analyse et un jugement sur la base de ceux-ci et transmettre le résultat de ceux-ci à un système de détermination de fatigue par signaux physiologiques du corps humain, et
un système d'alarme de surveillance configuré pour surveiller le personnel en temps réel et émettre une alarme lorsqu'il est déterminé, par le système de détermination de fatigue, que le personnel est fatigué ; et
dans lequel le système de commande central (101, 102) comprend en outre :
le système de détermination de fatigue par signaux physiologiques du corps humain qui est utilisé pour l'analyse de la fatigue, le jugement et alarmer le personnel, et pour déterminer un degré de fatigue du personnel sur la base d'un changement des signaux physiologiques, et dans lequel les signaux physiologiques comprennent des ondes cérébrales dans la tête et/ou des signaux d'électromyographie, EMG, dans le bras.

2. Système de gestion centralisée d'inspection de sécurité selon la revendication 1, dans lequel le serveur de gestion (205) réalise une interprétation sur une image obtenue à partir du dispositif d'inspection (202) et transmet des données au poste de travail d'interprétation d'image (203).

3. Système de gestion centralisée d'inspection de sécurité selon la revendication 2, comprenant en outre : un système d'alarme configuré pour déclencher une alarme ou interagir avec un système d'alarme d'un poste de police pour déclencher l'alarme dans une condition prédéterminée et transmettre des informations d'alarme au serveur de gestion (205) pour réaliser une analyse statistique.

4. Système de gestion centralisée d'inspection de sécurité selon la revendication 1, dans lequel le système de commande central (101, 201) est en outre configuré pour afficher un état de fonctionnement en temps réel de chaque dispositif d'inspection (202) et émettre une alarme lorsque le dispositif d'inspection (202) tombe en panne, de sorte que le poste de travail de système de gestion (2011) puisse réaliser une analyse statistique sur un traitement de panne.

5. Système de gestion centralisée d'inspection de sécurité selon la revendication 1, comprenant en outre : une station de déballage (206) munie d'un détecteur de liquides et/ou d'un détecteur d'explosifs et configurée pour détecter en outre un bagage suspect.

6. Système de gestion centralisée d'inspection de sécurité selon la revendication 5, dans lequel le serveur de gestion (205) traite des données de détection de liquides et/ou des données de détection d'explosifs anormales, et téléverse le résultat traité vers le système de commande central (101, 201).

7. Système de gestion centralisée d'inspection de sécurité selon la revendication 1, dans lequel le système de surveillance (204) surveille la scène d'inspection en temps réel comprend : la surveillance d'un état d'un passager transportant un bagage avant que le bagage ne traverse le dispositif d'inspection (202), pendant que le bagage traverse le dispositif d'inspection (202), ou après que le bagage a traversé le dispositif d'inspection (202), de façon à réduire l'éventail des suspects au moyen d'une recherche vidéo par segment ou d'une correspondance floue lorsqu'il est identifié que le bagage est suspecté.

8. Système de gestion centralisée d'inspection de sécurité selon la revendication 1, dans lequel des données de fatigue sont transmises au système de commande central (101, 201) via le réseau lorsque l'état de fatigue du personnel est détecté, le système de détermination de fatigue réalise une analyse et un jugement sur les données de fatigue, et lorsqu'il est déterminé que le personnel est fatigué, le rappel d'alarme apparaîtra automatiquement dans une scène au niveau de laquelle le personnel travaille.

9. Système de gestion centralisée d'inspection de sécurité selon la revendication 1, dans lequel lorsqu'un signal de fatigue est généré, le bracelet intelligent effectue une analyse et un jugement et transmet le résultat à un système de détection de fatigue par signaux physiologiques du corps humain via le réseau, dans lequel le système de détection de fatigue par signaux physiologiques du corps humain réalise une analyse et un jugement sur des données de fatigue, et lorsqu'il est déterminé que le personnel est fatigué, l'alarme apparaîtra automatiquement dans une scène au niveau de laquelle le personnel travaille.

10. Système de gestion centralisée d'inspection de sécurité selon la revendication 1, comprenant en outre : un module de diffusion et de réception de réseau d'informations configuré pour réaliser une gestion à distance, une surveillance à distance et un commandement à distance de cadres.

11. Système de gestion centralisée d'inspection de sécurité selon la revendication 1, comprenant en outre : une base de données d'informations multimédia configurée pour stocker au moins l'un parmi un texte, une image, un graphique et des informations vocales.

12. Système de gestion centralisée d'inspection de sécurité selon la revendication 11, dans lequel les informations multimédias comprennent : au moins l'un parmi des images vidéo dynamiques d'un passager et d'un bagage lorsqu'ils traversent la scène du dispositif d'inspection (202), une image d'inspection du bagage, des données de détection de liquides, des données de détection d'explosifs, une détection de fatigue et une surveillance d'état de travail du personnel, et un état de fonctionnement en temps réel d'un dispositif d'inspection de sécurité (202) au point de contrôle de sécurité dans le réseau.

13. Système de gestion centralisée d'inspection de sécurité selon la revendication 1, comprenant en outre : un module d'interrogation et de recherche d'informations multimédia configuré pour fournir une fonction d'information numérique et une fonction de recherche.
